# EUROPÄISCHE PATENTSCHRIFT

(11) **EP 0 536 541 B1**
(45) Veröffentlichungstag und Bekanntmachung des Hinweises auf die Patenterteilung: **08.01.1997**
(21) Anmeldenummer: 92115232.8
(22) Anmeldetag: 05.09.1992
(51) Int. Cl.: H02G 3/26

(54) **Formbare Folie zum Befestigen auf einer Unterlage und Abschirmen von Strahlungen oder zum Isolieren von elektrisch leitenden Teilen**
Mouldable sheet for mounting on a support and shielding against radiation or for insulating electrically conductive parts
Feuille déformable pour accrocher sur un support et protéger contre les rayonnements ou isoler des parties électriquement conductrices

(30) Priorität: 05.10.1991 DE 4133122
(43) Veröffentlichungstag der Anmeldung: 14.04.1993
(73) Patentinhaber: BESMA BESCHICHTUNGSMASSEN GmbH, D-69115 Heidelberg (DE)
(72) Erfinder: Klösel, Egon, W-6909 Walldorf (DE)
(74) Vertreter: Sartorius, Peter, Dipl.-Ing.

(56) Entgegenhaltungen:
- EP-A- 0 327 675
- EP-A- 0 330 082
- EP-A- 0 340 910
- WO-A-90/01411
- DE-U- 8 119 857

## Beschreibung

Die Erfindung bezieht sich auf eine formbare aus mehreren Schichten gebildete Folie zum Abschirmen von Strahlungen, Strömungen und/oder elektrischen Feldern und/oder zum Isolieren oder zur galvanischen Trennung von elektrisch leitenden oder leitfähigen Teilen und/oder zum Befestigen von Teilen oder von Bauteilen, Rohren oder elektrischen Leitungen auf einer Unterlage.

Es sind bereits allgemein Polymerwerkstoffe bzw. Polymergewebe und auch aus Aluminium hergestellte Bänder bekannt, die an der Unterseite mit einer Klebefläche versehen sind und dafür eingesetzt werden, zu schützende Flächen abzudecken. Es ist auch bekannt, diese Klebebänder zum Schutz von Leitungen oder als Befestigungselemente einzusetzen. Diese Klebebänder haben jedoch den Nachteil, daß sie Verunreinigungen auf den Oberflächen der Kabelleitungen bzw. auf dem Untergrund hinterlassen, wenn sie einmal von den Kabel leitungen abgezogen werden sollen. Mit Klebeflächen versehene Aluminiumbänder, die zur Abschirmung eingesetzt werden können, lassen sich nur schlecht verarbeiten, da sie keine mechanische Festigkeit aufweisen und nach einiger Zeit leicht korrodieren.

Ferner ist aus der DE 38 15 749 A1 ein Befestigungselement aus Kunststoff bekannt, das aus einem Kopf und einem in ein Bohrloch einsteckbaren Schaft besteht, der außen mit einer Rippenanordnung nach Art eines Dübels versehen ist. An dem Kopf des Dübels ist eine als Kabelkanal vorgesehene Schlaufe angeordnet, in der zahlreiche Kabel nebeneinander angeordnet werden können. Eine derartige Befestigungsvorrichtung ist jedoch sehr aufwendig und läßt sich nur durch Beschädigung des Untergrunds montieren.

Es ist ferner eine Kabelaufnahmevorrichtung bekannt (EP-A-0 330 082), die eine flexible Umhüllung aufweist, die in einem Kabelkanal eingelegt werden kann und in der das Kabelbündel angeordnet wird. Längs einer sich in Längsrichtung des Kabels erstreckenden Kante ist die Umhüllung mit einer Erdungsschlitze versehen, und in der Nähe der Erdungsschlitze ist eine Haftschicht angeordnet, um den anderen Randbereich der Umhüllung darüber zu legen und die Umhüllung somit zu schließen. An der Außenseite befindet sich eine weitere Haftschicht, die an der Innenseite des Kabelkanals festgeklebt wird. Die Kabelaufnahmevorrichtung ist jedoch an sich nur im Bereich der Knickkante der Seitenteile elastisch ausgebildet, so daß sich der obere Teil der Kabelaufnahmevorrichtung an den unteren Teil heranklappen und über eine Nutverbindung verschließen lassen kann. Eine Anpassung der Kabelaufnahmevorrichtung an unterschiedlich geformte Kabel ist nicht möglich. Der an sich rechteckförmige Querschnitt der Kabelaufnahmevorrichtung läßt sich nicht verändern. Die Kabelaufnahmevorrichtung läßt sich also nur für einen ganz bestimmten Zweck einsetzen.

Ferner ist eine Folie zum Befestigen von Teppichen auf einer Unterlage bekannt (WO 90/01411), wobei zumindest zwischen der Auslegware und einer Verstärkungsschicht eine Klebeschicht vorgesehen ist. Die als Verbund ausgebildete Folie besteht aus einem gewebten Material und aus Plastikmaterial, wobei das Verstärkungselement aus Streifenelementen gebildet ist. Derartige Verbundfolien eignen sich dazu, Teppichmaterial auf einem Boden zu befestigen, dienen jedoch nicht zur elektrischen Abschirmung.

Ferner ist aus der DE 34 44 533 A1 ein Halterungselement zur Befestigung von Leitungen auf einer Unterlage bekannt, das insbesondere bei Wärmeplatten einer Flächenheizung eingesetzt wird und das zur Aufnahme von Leitungsrohren dient. Der Bügel ist aus einer Schelle mit zwei horizontal verlaufenden Schenkeln gebildet, an deren Unterseite je eine Klebefläche zur Befestigung auf einer Unterlage vorgesehen ist. Ein derartiges Befestigungselement bzw. eine Rohrschelle ist jedoch aufwendig und teuer und dient lediglich zur Befestigung von Rohrleitungen. Hierzu werden zahlreiche Schellen mit Abstand zueinander auf der Unterlage befestigt. Als durchgehendes bzw. einteiliges Befestigungselement für lange Rohrleitungen ist es jedoch nicht einsetzbar. Außerdem muß für jeden Durchmesser eine entsprechend große Schelle eingesetzt werden, so daß dadurch die Lagerhaltungskosten relativ hoch sind.

Demgegenüber liegt der Erfindung die Aufgabe zugrunde, eine weiche und leicht verformbare, an unterschiedliche Bedingungen anpaßbare Mehrschichtenfolie zu schaffen, die einmal als Befestigungseinrichtung und zum anderen auch als Abschirmvorrichtung einsetzbar ist.

Gelost wird die Aufgabe dadurch, daß die formbare aus mehreren Schichten gebildete Folie zum Abschirmen von Strahlungen, Strömungen und/oder elektrischen Feldern und/oder zum Isolieren oder zur galvanischen Trennung von elektrisch leitenden oder leitfähigen Teilen und/oder zum Befestigen von Teilen oder von Bauteilen, Rohren oder elektrischen Leitungen auf einer Unterlage, wobei eine Schicht äußere bzw. obere Schicht quer zur längsseite bzw. zur Langsmittelachse der Folie gestreckt ist und mindestens eine weitere, mit der ersten mittel- oder unmittelbar verbundene Schicht entgegengesetzt dazu, ebenfalls zur Längsmittelachse der Folie, derart gestreckt ist, daß die Strecklinien bzw. die dadurch ausgerichtete Molekularstruktur der Schichten sich in einem Winkel schneiden und eine der beiden Schichten einen ganzflächigen oder in Streifen aufgebrachten Kleber aufweist und eine der Schichten über eine Polyo-Schmelze mit einer Metallschicht mittel- oder unmittelbar verbunden ist.

Hierdurch erhält man eine sehr kostengünstige, leicht verformbare Befestigungsvorrichtung, die ohne weiteres als Kabelkanal einsetzbar ist, da sie an der Unterseite der einen Folie mit einer durchgehenden Klebefläche versehen ist, die zur Befestigung der Folie auf einem Untergrund geeignet ist. Dadurch läßt sich die Folie auch aufgrund der besonderen Materialauswahl, beispielsweise Kreuzlaminat oder Metallfolie, als widerstandsfähiger Kabelkanal formen und somit Kabel in dem neu geformten Kabelkanal aufnehmen. Sind zwei Folien unterschiedlicher Materialeigenschaften, beispielsweise Polyäthylen oder Metall, z. B. Aluminium, miteinander verbunden, so ist es besonders vorteilhaft, daß die eine aus Polyäthylen hergestellte Folie als Kreuzlaminat ausgebildet ist, wobei die Streckung quer zur Längsmittelachse der darunter liegenden Folie verläuft. Dabei ist es besonders vorteilhaft, daß der Kleber eine bestimmte Stärke nicht überschreitet, bzw. wird ein noch besseres Ergebnis erzielt, wenn die Folie über eine Schmelze mit dem Metallteil verbunden wird. Die Kombination von Kleber bzw. Schmelze unter Berücksichtigung einer bestimmten Stärke und die Ausbildung mindestens einer Folie als Kreuzlaminat ergibt einen sehr leicht herstellbaren Verbundwerkstoff, bei dem Verwerfungen der Folie nicht mehr auftreten. Durch die Verwendung einer als Kreuzlaminat ausgebildeten Kunststoffolie in Verbindung mit einer Metallfolie wird außerdem eine sehr hohe Reißfestigkeit der Folie erreicht.

Die in vorteilhafter Weise als Befestigungs- oder als Kabelkanal einsetzbare Folie kann gleichzeitig auch als Abschirmeinrichtung für elektrische Leitungen und Einrichtungen verwendet werden. Wird beispielsweise die Folie als Befestigungseinrichtung für ein Kabel eingesetzt, so werden die beiden außen liegenden Klebeflächen beiderseits des Kabels am Boden angedrückt und somit auf einfache Weise befestigt. Hierdurch erhält man einen Kabelkanal, der zur Aufnahme eines oder mehrerer Kabel dienen kann. Je nach Größe des Freiraums kann das Kabel auch innerhalb der durch die Folie gebildeten Wölbung verschoben werden, wobei dann das Kabel auf dem Boden nur seitlich fixiert ist. Auf diese Weise läßt sich das Kabel innerhalb der Befestigungseinrichtung ohne weiteres nachziehen, wenn dies erforderlich ist. Mit den bekannten Folien ist ein derartiger Einsatz nicht möglich.

Hierzu ist es vorteilhaft, daß eine erste bzw. obere in eine Richtung quer zur Längsseite der Folie gestreckte Schicht über eine PE-Schmelze mit der zweiten, entgegengesetzt zur ersten Schicht gestreckten Schicht miteinander verbundenen ist, die mittel- oder unmittelbar über eine PE-Schmelze mit einer Metallschicht verbunden ist, wobei der Kleber über eine PE-Schmelze mit einer der beiden Schichten verbunden ist.

Vorteilhaft ist es auch, daß zwischen zwei entgegengesetzt gestreckten Schichten die Metallschicht vorgesehen ist, die beiderseits über die PE-Schmelze mit den Schichten verbunden ist, wobei eine der Schichten den Kleber trägt, und daß nach zwei entgegengesetzt gestreckten Schichten die Metallschicht vorgesehen ist, die über die PE-Schmelze mit den oberen Schichten verbunden ist und über eine weitere PE-Schmelze mit zwei weiteren entgegengesetzt gestreckten Schichten verbunden ist, wobei die eine außen liegende Schicht den Kleber trägt.

Hierzu ist es ferner vorteilhaft, daß auf der Unterseite der einen Schicht der Folie mindestens zwei mit Abstand zueinander angeordnete klebfähige Flächen vorgesehen sind, wobei die fest miteinander verbundenen Schichten als Kreuz laminierung ausgebildet sind. Werden derartige als Verbund hergestellte Folien in einer Kreuzlaminierung ausgebildet, so erhält man eine sehr hohe Festigkeit für höchste Beanspruchungen.

Die mit Abstand zueinander angeordneten Klebeflächen auf der erfindungsgemäßen Folie eignen sich insbesondere für Kanäle oder Kabelkanäle, die auf der Oberfläche eines Bauteils oder eines Bodens bzw. einer Wand aufzubringen sind. Die Abstände zwischen den einzelnen Klebeflächen können unterschiedlich groß sein, sind also variabel und können an der Oberfläche des Untergrunds aufgebracht bzw. verklebt werden, und zwar in der Weise, daß sich zwischen den klebfähigen Stellen im klebfreien Bereich der Folie auf einfache Weise eine Wölbung bzw. ein Freiraum schaffen läßt, der geeignet ist, Kabel bzw. elektrische Leitungen aufzunehmen, die dann durch die Randverklebung ohne weiteres auf der Oberfläche des Bodens befestigt werden können. Durch den Freiraum zwischen den Klebeflächen besteht auch die Möglichkeit, die Leitungen in Längsrichtung innerhalb des Kabelkanals zu bewegen.

In weiterer Ausgestaltung der Erfindung ist es vorteilhaft, daß auf der Unterseite der einen Schicht der Folie mindestens zwei mit Abstand zueinander angeordnete, sich über die gesamte Länge der Folie erstreckende, parallel verlaufende klebfähige Flächen vorgesehen sind.

Vorteilhaft ist es ferner, daß auf der Unterseite der einen Schicht der Folie eine auf eine Oberfläche eines zu befestigenden Teils rückstandsfrei aufbringbare Klebefläche vorgesehen ist, wobei der Klebwerkstoff des klebfähigen Streifens aus einem Stoffgemisch besteht und zur Haftung des Klebstoffs auf der Schicht der Folie die Gefügestruktur der Schicht durch Koronaentladung vorbehandelt ist.

Durch die vorteilhafte Wahl des auf die Folie aufgebrachten Klebers besteht auch die Möglichkeit, die Folie mit dem Kleber ohne weiteres wieder von der Oberfläche des Bodens zu entfernen, wenn beispielsweise das Kabel neu verlegt wird.

Auch ist es vorteilhaft, daß zumindest die eine Schicht der Folie aus einem Kunststoffmaterial, oder aus einem Polymerwerkstoff bzw. aus einem Polymerwerkstoffgewebe, gebildet ist und daß die formbare und/oder elastisch ausgebildete Folie mit ihren beiden klebfähigen Streifen auf der Oberfläche eines feststehenden Teils bzw. auf der Oberfläche des Bodens befestigbar ist und die klebfähigen Streifen derart mit Abstand zueinander angeordnet sind, daß der mittlere bzw. der zwischen den klebfähigen Streifen liegende Teil zur Aufnahme von Rohren, Kabeln oder anderen Bauteilen einen in der Höhe und/oder Breite veränderbaren Aufnahmeraum bildet.

Vorteilhaft ist es auch, daß die Folie aus einem Verbundlaminat oder aus einem Polyäthylen-Verbundlaminat bzw. Polyäthylen-Verbundlaminatgewebe besteht.

In weiterer Ausgestaltung der Erfindung ist es vorteilhaft, daß die Schichten der Folie aus einem eine unterschiedliche Festigkeit aufweisenden Verbundlaminat gebildet sind.

Als besonders vorteilhaft wird angesehen, daß die Folie aus drei Schichten gebildet ist, wobei mindestens zwei Schichten untereinander oder zur dritten Schicht eine unterschiedliche Festigkeit aufweisen und daß zwei Schichten aus Polyäthylen und die dritte Schicht aus einem kunststoffarmen bzw. kunststofffreien Material besteht.

Vorteilhaft ist es ferner, daß zumindest die mittlere Schicht zur Abschirmung bzw. zur Behinderung der Wirkungsausbreitung von Strahlungen, elektrischen Feldern und/oder Strömungen aus einem Metallwerkstoff besteht. Da die Befestigungseinrichtung bzw. die als Folie ausgebildete Befestigungseinrichtung aus Kunststoffmaterial gebildet ist, das aus zwei oder aus mehreren Schichten besteht, kann diese einer sehr hohen Zugkraft ausgesetzt werden, ohne daß ein Reißen der Folie zu befürchten ist. Dies wird u.a. auch durch die Kreuzlaminierung gewährleistet.

Es ist jedoch auch möglich, die Zug- bzw. Einreißfestigkeit der Folie herabzusetzen, wenn das für bestimmte Einsatzfälle wünschenswert ist, insbesondere dann, wenn die Folie als kurzfristiges Befestigungselement eingesetzt und z.B. bei Kabelverlegung in Fernsehanstalten nur für kurze Zeit auf dem Boden befestigt werden soll. Um ein schnelles Verlegen und Befestigen der Kabel zu ermöglichen, ist es dann wünschenswert, die Einreißfestigkeit der Folie so zu gestalten, daß sie ohne Schneidwerkzeug von einer Rolle abgerissen werden kann. Hierzu ist es vorteilhaft, daß die miteinander verbundenen Schichten der Folie im Längslaminat ausgebildet werden.

In weiterer Ausgestaltung der Erfindung ist es vorteilhaft, daß zumindest eine Schicht bzw. die dritte Schicht zur Abschirmung bzw. zur Behinderung der Wirkungsausbreitung von Strahlungen, Feldern und/oder Strömungen oder zur galvanischen Trennung von elektrisch leitenden oder leitfähigen Teilen zumindest teilweise aus einem Glas-, Polyacrylharz-, Polyäthylen- oder Paraffinwerkstoff und/oder entsprechendem Gewebe besteht.

Zur Behinderung der Wirkungsausbreitung von Strahlungen, Feldern oder Strömungen können unterschiedliche Werkstoffe, in vorteilhafter Weise Glas-, Polyacrylharz-, Polyäthylen-, Paraffin- oder Metallwerkstoffe, eingesetzt werden. Es ist auch möglich, Metalle, insbesondere Aluminium, Aluminiumgewebe, Blei- oder Bleigewebe bzw. andere Materialien zwischen zwei Schichten aufzunehmen, um Sekundärstrahlung bzw. Sekundäreffekte (Ionisierung, Röntgenstrahlung, α-, β- oder Ω-Strahlung) abzuschirmen.

Die erfindungsgemäße Folie kann also alternativ als Befestigungseinrichtung und als Abschirmeinrichtung oder gleichzeitig für beide Einsatzgebiete Verwendung finden. Wird die Folie als Befestigungseinrichtung für ein Kabel gelegt, so werden die beiden außen liegenden Klebeflächen beiderseits des Kabels am Boden angedrückt und somit auf einfache Weise befestigt, so daß das Kabel in dem hierdurch gebildeten Kabelkanal fixiert wird. Je nach Größe des Freiraums kann das Kabel auch innerhalb der durch die Folie gebildeten Wölbung verschoben werden, wobei dann das Kabel auf dem Boden nur seitlich fixiert ist. Auf diese Weise läßt sich das Kabel innerhalb der Befestigungseinrichtung ohne weiteres nachziehen, wenn dies erforderlich ist.

Durch die Verwendung von zwei oder mehreren Schichten, die als Verbundmaterial hergestellt werden, wird die Festigkeit der Folie erhöht. Außerdem läßt sich auf einfache Weise zwischen den beiden außen liegenden Schichten das Abschirmmaterial einbringen.

Hierzu ist es vorteilhaft, daß die dritte Schicht, insbesondere die Metall enthaltende Schicht, zwischen den beiden außen liegenden Kunststoffschichten eingebettet ist.

Vorteilhaft ist es auch, daß die dritte Schicht aus einem Metallgewebe, insbesondere aus einem Kupfergewebe besteht.

Soll die Folie als Befestigungs- und Abschirmeinrichtung eingesetzt werden, so ist es vorteilhaft, daß die unterste und/oder die oberste Schicht zwei oder mehrere mit Abstand zueinander angeordnete, klebfähige Streifen aufweist, wobei die einzelnen Abstände gleich oder unterschiedlich groß sind und daß der Aufnahmeraum von elektrischen Leitungen als Bauteilkanal, insbesondere als Kabelkanal, ausgebildet bzw. formbar ist.

Vorteilhaft ist es auch, daß im Bereich des Aufnahmeraums bzw. Kabelkanals ein dritter klebfähiger Streifen vorgesehen ist, der mit einem im Aufnahmeraum vorgesehenen Bauteil verbindbar ist.

Vorteilhaft ist es ferner, daß der klebfähige Streifen eine Breite zwischen 5 und 50 mm aufweist und daß der Klebwerkstoff des klebfähigen Streifens aus einem Stoffgemisch besteht, das Acrylklebstoffanteile enthält, wobei die Lösungsmittelbestandteile unter 1% liegen.

Ferner ist es vorteilhaft, daß der Klebwerkstoff des klebfähigen Streifens UV-beständig ist.

Vorteilhaft ist es außerdem, daß das Verbundmaterial bzw. die beiden äußeren Schichten der Folie aus Polyolefinmaterial bestehen und elektrisch leitfähig ausgebildet sowie mit einer zweiten Metallschicht verbindbar sind.

In weiterer Ausgestaltung der Erfindung ist es vorteilhaft, daß die Folie bzw. das Verbundmaterial eine Dicke bis zu 200 µm aufweist und daß das Verbundmaterial bzw. die Folie als Mehrschichtfolie mit mehr als drei Schichten ausgebildet ist, wobei zwischen jeweils zwei Kunststoffschichten eine weitere, leitende Schicht vorgesehen ist, deren Dicke gleich oder kleiner als die Dicke des Verbundmaterials ist.

Eine zusätzliche Möglichkeit ist gemäß einer Weiterbildung der erfindungsgemäßen Folie, daß die Folie auf einer oder beiden Seiten mit einer Kaschierung aus Papier und/oder Stoffgewebe versehen ist und daß zumindest eine äußere Schicht der Folie mit einer Lochung versehen ist.

Vorteilhaft ist außerdem, daß eine Schicht aus Metall und die zweite und/oder dritte Schicht aus Polyester, Polyäthylen oder Polyolefine im Kreuzlaminat auf die Nachbarschicht aufgebracht ist, wobei die Schichten flammhemmende Zusätze aufweisen und daß zumindest eine Schicht bzw. das Polyäthylenmaterial eine Stärke zwischen 0,035 mm und 0,5 mm, oder eine Stärke zwischen 0,08 mm und 0,15 mm, aufweist.

Als besonders vorteilhaft hat sich herausgestellt, daß das Stoffgemisch aus einem Acrylwerkstoff mit einem Lösungsmittel unter 1% oder einer Acryldispersion besteht, wobei das Flächengewicht zwischen 20 und 70 gr/m² oder zwischen 25 und 50 gr/m², vorzugsweise 30 gr/m² beträgt.

Durch die vorteilhafte Erdung der Kanalfolie können auf einfache Weise Kriechströme abgeleitet werden. Dies kann durch Erdung der Verbundfolie erreicht werden. In vorteilhafter Weise kann der Metallträger des Verbundes auch als Leiter für Kriechströme oder als Impulsübermittler verwendet werden. Ferner besteht die Möglichkeit, derartige Folien zur Auskleidung von einen großen Querschnitt aufweisenden Rohren einzusetzen.

Außerdem ist es möglich, als Dreierverbund ausgebildete Folien ohne Kleber herzustellen und sowohl als Korrosionsschutz einzusetzen als auch als Abschirmeinrichtung gegen statische Aufladung von Schaltanlagen oder zur Abschirmung ganzer Räume. Hierzu ist es vorteilhaft, wenn die mittlere Schicht als Kupfergitter oder einem anderen Metallgitter ausgebildet ist.

Zur Verbesserung des Abschirmverhaltens ist es vorteilhaft, wenn die mittlere Metallfolie eine Dicke zwischen 100-200 µm, vorzugsweise von 200 µm, ausweist. Wird beispielsweise die Folie als Mehrschichtfolie ausgebildet und wird zwischen den einzelnen Kunststoffschichten je eine weitere leitende Schicht vorgesehen, so kann hierdurch die Leitfähigkeit und das Abschirmverhalten der gesamten Folie wesentlich verbessert werden.

Durch die vorteilhaft ausgebildete Folie und die beschriebenen Materialien kann die Abschirmung gegen statische, magnetische, elektrische bzw. Funkstörungen sowie gegen Mikrowellen, Röntgen- und Gammastrahlen auf einfache und kostengünstige Weise erreicht werden.

Durch den Einsatz von polymeren Stoffen beispielsweise Polyofinen wird die als Zwischenschicht zur Abschirmung oder als Leiter vorgesehene Metallschicht vorzugsweise mittels Polyo-Schmelze zwischen die beiden spiralgereckten Polyofilme kaschiert. Weitere Schichten können auf ähnliche Weise als spiralgeschnittene Flachbahnen im Kreuzlaminat als normaler Polyofilm oder als Metallfilm ergänzt werden.

Die Folie 1 kann aus einem Mehrschichtensystem mit folgenden Schichtaufbau bestehen. Nachfolgend sind vier Schichtsysteme beschrieben, die sich als besonders vorteilhaft herausgestellt haben und zwar:
1.
   Spiralfilm mit einer Stärke zwischen 35 µm und 60 µm,
2.
   Schmelze mit einer Stärke zwischen 10 µm und 15 µm,
3.
   Spiralfilm mit einer Stärke zwischen 35 µm und 60 µm,
4.
   Kleber mit einer Stärke zwischen 25 und 50 gr/m².

Vorteilhaft ist ferner, daß die Folie aus einem Mehrschichtensystem mit folgendem Schichtaufbau besteht:
1.
   Spiralfilm mit einer Stärke zwischen 35 µm und 60 µm,
2.
   Schmelze mit einer Stärke zwischen 10 µm und 15 µm oder Kleber mit einer Stärke zwischen 25 und 50 gr/m²,
3.
   Metallfilm mit einer Stärke zwischen 7 µm und 200 µm,
4.
   Schmelze mit einer Stärke zwischen 10 µm und 15 µm,
5.
   Spiralfilm mit einer Stärke zwischen 35 µm und 60 µm,
6.
   Kleber mit einer Stärke zwischen 25 und 50 gr/m².

Vorteilhaft ist es auch, daß die Folie aus einem Mehrschichtensystem mit folgendem Schichtaufbau besteht:
1.
   Kreuzlaminat mit einer Stärke zwischen 80 µm und 130 µm, wobei das Kreuzlaminat aus zwei Polyolefinwerkstoff-Laminaten besteht, die über eine Schmelze miteinander verbunden sind,
2.
   Schmelze mit einer Stärke zwischen 10 µm und 15 µm,
3.
   Metallfolie oder Metallfoliengewebe mit einer Stärke zwischen 7 µm und 200 µm,
4.
   Schmelze mit einer Stärke zwischen 10 µm und 15 µm,
5.
   Spiralfilm, der aus einem Polyolefinwerkstoff besteht mit einer Stärke zwischen 35 µm und 60 µm,
6.
   Schmelze mit einer Stärke zwischen 10 µm und 15 µm oder Kleber mit einer Stärke zwischen 25 und 50 gr/m².

Ferner ist es vorteihaft, daß daß die Folie aus einem Mehrschichtensystem mit folgendem Schichtaufbau besteht:
1.
   Kleber mit einer Stärke zwischen 25 und 50 gr/m²,
2.
   Kreuzlaminat mit einer Stärke zwischen 80 µm und 130 µm,
3.
   Schmelze mit einer Stärke zwischen 10 µm und 15 µm,
4.
   Metallfolie oder Metallfoliengewebe mit einer Stärke zwischen 7 µm und 200 µm
5.
   Schmelze mit einer Stärke zwischen 10 µm und 15 µm,
6.
   Polyolefinwerkstoff mit einer Stärke zwischen 10 µm und 15 µm.

Als besonders vorteilhaft hat sich herausgestellt, daß das Stoffgemisch aus einem Acrylwerkstoff mit einem Lösungsmittel unter 1% oder einer Acryldispersion besteht, wobei das Flächengewicht zwischen 20 und 70 gr/m² oder zwischen 25 und 50 gr/m², vorzugsweise 30 gr/m² beträgt.

Weitere Vorteile und Einzelheiten der Erfindung sind in den Patentansprüchen und in der Beschreibung aufgeführt und in den Figuren dargestellt.

In den Figuren ist die Erfindung an einer Ausführungsform beispielsweise dargestellt, ohne auf diese Ausführungsform beschränkt zu sein. Es zeigt:
- Fig. 1: eine Schnittdarstellung eines Kabelkanals mit einem als Befestigungseinrichtung ausgebildeten Klebeband,
- Fig. 2: ein zweites Ausführungsbeispiel eines Kabelkanals mit einem aus drei Schichten gebildeten Klebeband,
- Fig. 2a: ein zweites Ausführungsbeispiel gemäß Fig. 2 eines Kabelkanals jedoch mit einem durchgehenden Nietsschaft,
- Fig. 3: eine Draufsicht gemäß Fig. 1 mit den beiden außen liegenden Klebestreifen,
- Fig. 4: ein weiteres Ausführungsbeispiel einer Befestigungseinrichtung mit mehreren Kabeln bzw. Leitungen im Querschnitt,
- Fig. 5: eine perspektivische Darstellung verschiedener Befestigungsvorrichtungen als Kabelkanal für unterschiedliche Funktionen.
- Fig. 6: eine perspektivische Darstellung der einzelnen Schichten der Befestigungsvorrichtung vor dem Zusammenfügen.
- Fig. 6a bis 10: Schnittdarstellungen verschiedener Folienbahnen, die aus einzelnen unterschiedlich gestreckten Schichten bzw. Bahnen über PE-Fusionen oder miteinander verbunden sind, wobei an einer Stelle oder zwischen einer bestimmten Schicht eine Metallfolie eingebracht ist, während an der Oberfläche einer außen liegenden Schicht jeweils ein Kleber ganzflächig oder in Streifen vorgesehen ist,

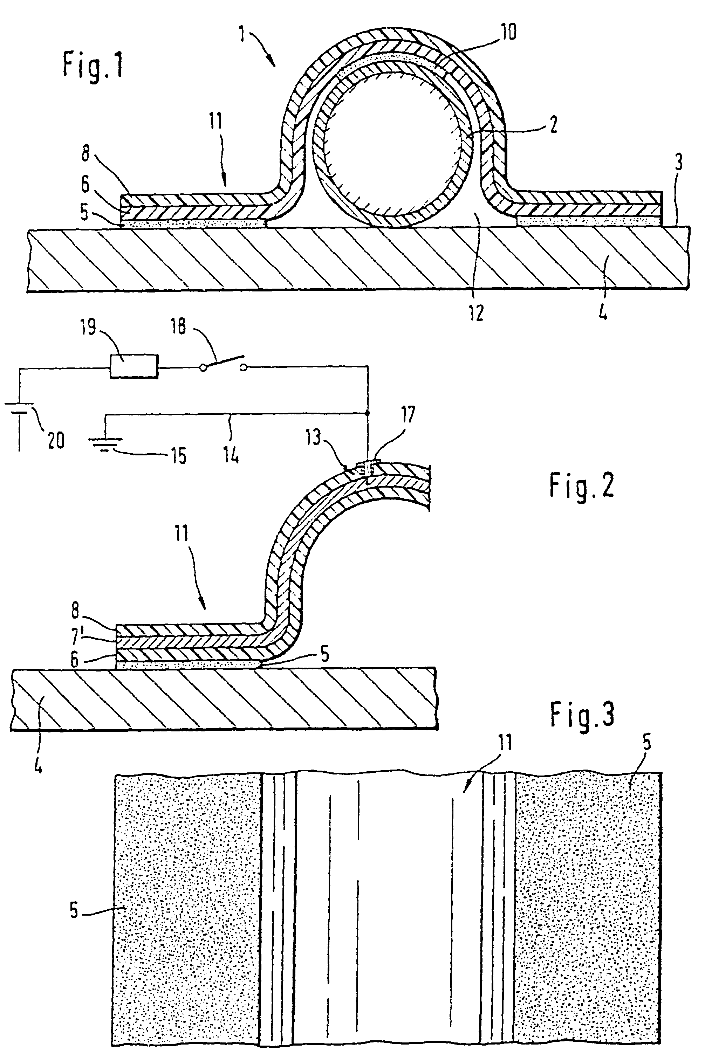

Die Folie 1 kann auch als Befestigungseinrichtung dienen und gleichzeitig oder auch separat als Abschirm- oder Isoliereinrichtung. Der in Fig. 1, 2 angedeutete Teil 4 kann Teil eines Fußbodens, einer Glasoberfläche bzw. eines Bauträgers sein, an dessen Oberfläche ein Bauteil, ein Kabel oder eine elektrische Leitung 2 mittels der Befestigungseinrichtung bzw. der Folie 1 fixiert oder auch dauerhaft befestigt werden kann.

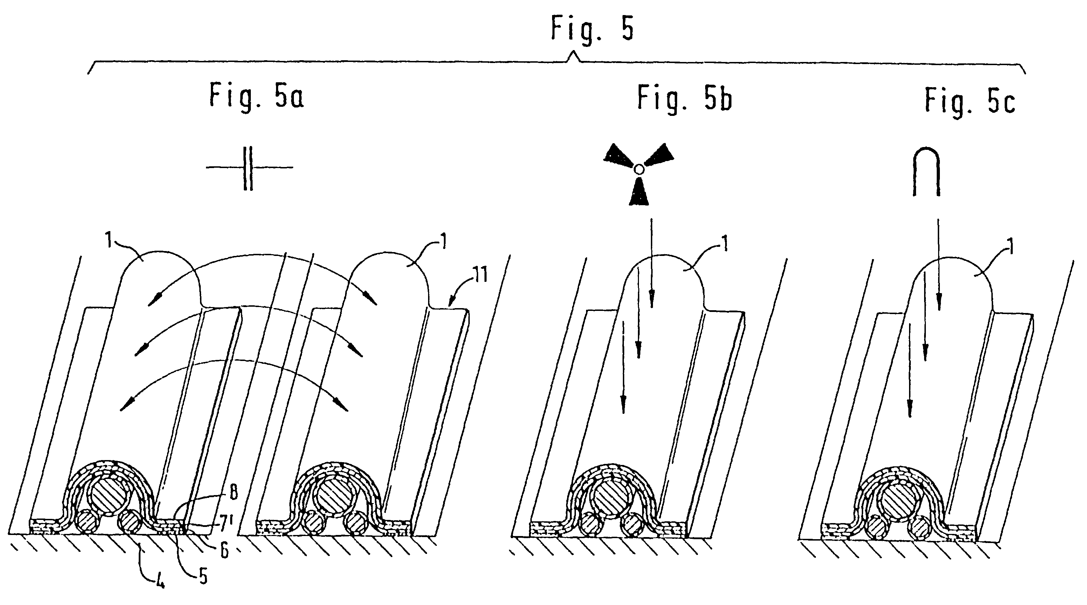

Die in den Figuren 1 bis 3 dargestellte Folie 1 besteht aus einem formbaren, weichen, hochfesten Verbundmaterial 11 mit mindestens einer durchgehenden klebfähigen Oberfläche oder zwei bzw. mehreren, nebeneinander angeordneten Klebeflächen, die parallel zueinander verlaufen und sich über die gesamte Länge der Folie 1 erstrecken (vergl. Fig. 5), die als endloses Folienband ausgebildet ist und auf einen Wickelkern aufwickelbar ist.

Die Klebeschicht 5 besteht nach einem anderen Ausführungsbeispiel in vorteilhafter Weise aus einem UV-beständigen Werkstoff, der außerdem die Eigenschaft hat, daß er rückstandsfrei gemeinsam mit seinem Trägerverbund wieder von der Oberfläche abgezogen werden kann. Da keine Rückstände zurückbleiben, braucht nach der Entfernung der Folie 1, die mittels dieses Klebers an der Oberfläche des Bodens 4 aufgebracht wurde, keine Nachbehandlung des Bodens 4 zu erfolgen.

Gemäß Fig. 1 besteht die eine Schicht 6 aus einem Verbundlaminat, die quer zur Längsseite bzw.. zur Längsmittelachse der Folie 11 gestreckt ist, auf der mindestens eine weitere, mit der ersten Schicht entgegengesetzt dazu, ebenfalls zur Längsmittelachse der Folie derart gestreckt ist, daß sich die Strecklinien bzw. die dadurch ausgerichtete Molekularstruktur der Schichten in einem Winkel schneiden. Auf der Schicht 6 ist die Metallschicht 7 angeordnet.

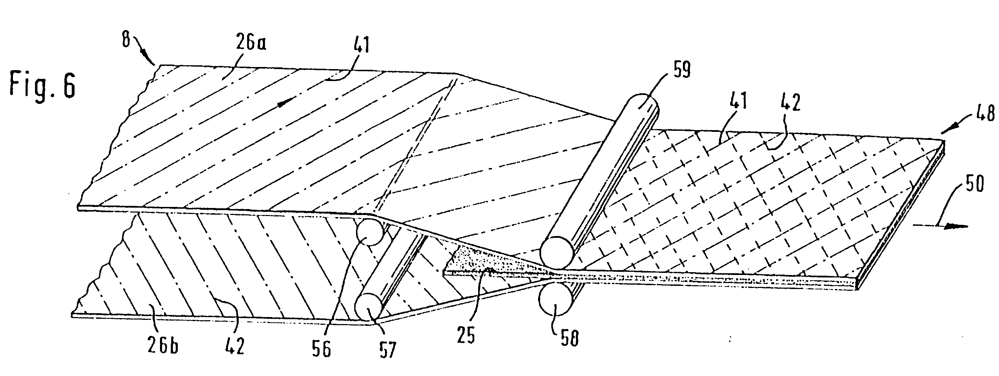

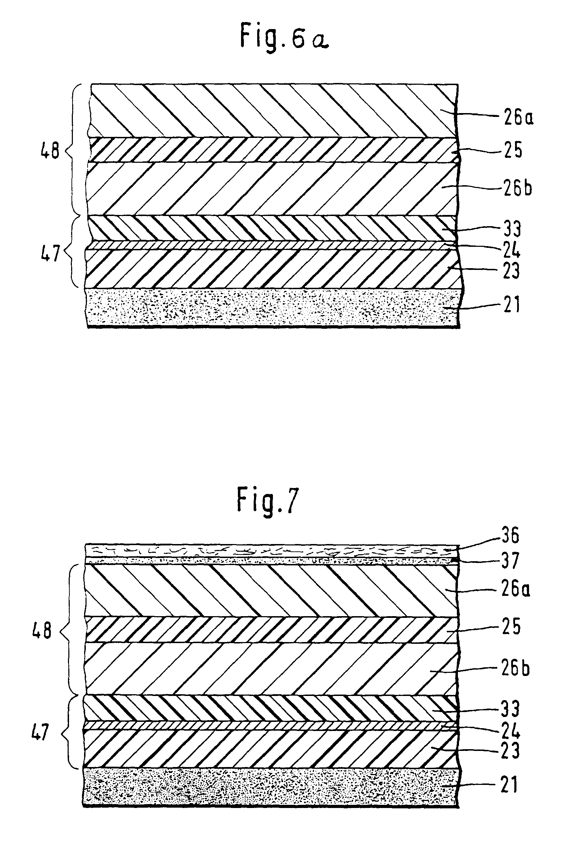

Gemäß Fig. 2± besteht die Befestigungseinrichtung 1 aus dem mehrschichtigen Laminat 11 bzw. Folienband, das als Kreuzlaminat hergestellt wird. Die Laminate bzw. die einzelnen Schichten 6, 7', 8 können in einer Richtung mit einer größeren Zugfestigkeit ausgestattet sein, z.B. in Längsrichtung zur Folie. Mit Bezug auf die Richtungsangabe können die einzelnen Schichten gegenüber der benachbarten Schicht unterschiedlich ausgerichtet sein, d.h. kreuzweise versetzt aufgebracht werden. Eine perspektivische Darstellung der einzelnen Schichten der Befestigungsvorrichtung vor dem Zusammenfügen ist in Fig. 6 dargestellt, dabei geben die einzelnen Linien die Ausrichtung der Folie wieder bzw. die Kraftlinien oder die Richtung mit der größeren Zugfestigkeit. Zwischen den beiden Schichten 6 und 7' kann die Schmelze bzw. ein Kleber eingebracht werden, der eine feste Verbindung zwischen den beiden Schichten 6 und 7' herstellt.

Das Verbundmaterial 11, das (gemäß Fig. 2) aus den beiden Schichten 6, 7' gebildet ist, kann aus einem Polymerwerkstoff bzw. aus Polyolefinwerkstoff oder Polyäthylen bestehen. Dadurch, daß das Verbundmaterial 11 aus zwei Schichten 6, 7' gebildet ist, erhält man in Längs- und Querrichtung eine große Widerstandsfähigkeit bzw. Zugfestigkeit bei einem sehr hohen Verformungsgrad. Ein derartiges Verbundmaterial 11 läßt sich ohne weiteres als schmiegsames, weiches Klebeband (Fig. 5) ausbilden, das auf einen in der Zeichnung nicht dargestellten Kern aufwickelbar ist.

Werden nach einem anderen Ausführungsbeispiel die einzelnen Laminate bzw. Schichten in Längsrichtung bzw. in der gleichen Ausrichtung verklebt oder miteinander verbunden, ergeben sich andere Vorteile. Derart hergestellte Klebebänder lassen sich ohne großen Kraftaufwand seitlich einreißen und somit ohne Schneidwerkzeug auf die notwendige Gebrauchslänge abtrennen. Durch das Einreißen wird das Klebeband nur geringfügig in Abrißrichtung gedehnt.

Wie aus Figur 1 hervorgeht, ist die Befestigungseinrichtung bzw. Folie 1 als Kabelkanal 12 beliebig form- und variierbar. Die Höhe und Breite des Kabelkanals 12 kann durch die leicht verformbare Folie 1 beliebig bestimmt und auch nach der Befestigung auf der Unterlage 4 durch Lösen einer Bandhälfte verändert werden. Die Form des Kabelkanals 12 erhält man in vorteilhafter Weise dadurch, daß das Verbundmaterial bzw. Laminat 11 mit mindestens zwei klebfähigen Streifen 5 versehen ist, die mit Abstand zueinander angeordnet sind und je nach Belastungsart zwischen 10 mm und 100 mm, insbesondere 20 mm, breit sein können. Die klebfähigen Streifen 5 sind vorzugsweise im Randbereich der Folie 1 in Längsrichtung vorgesehen. Die beiden klebfähigen Streifen 5 werden mit einem derart großen Abstand auf der Oberfläche 3 des Bodens 4 aufgebracht, daß sich der halbkreisförmige Kabelkanal 12 bildet, in dem verschiedene Bauteile aufgenommen und auf der Oberfläche 3 des Bodens 4 fixiert werden können. Im Ausführungsbeispiel gemäß Figur 1, 5 ist in dem Kabelkanal 12 das Kabel 2 vorgesehen.

Damit das Kabel 2 noch besser auf dem Boden 4 fixiert bzw. nicht ohne weiteres in Längsrichtung durch den Kabelkanal 12 gezogen werden kann, wenn dies nicht erwünscht ist, weist das Laminat bzw. Verbundmaterial 11 eine dritte Klebeschicht 10 auf, die eine feste Verbindung zwischen dem Laminat 11 und dem Kabel 2 herstellt.

Um die Festigkeit bei bestimmten Beanspruchungsarten weiterhin zu verbessern und volle Abschirmung zu erreichen, kann das Verbundmaterial aus drei oder mehr Schichten hergestellt werden. Im Ausführungsbeispiel, gemäß Figur 2, besteht das Verbundmaterial bzw. das Laminat 11 aus drei Schichten 6, 7, 8, die unterschiedliche Festigkeit aufweisen können und aus einem Verbund aus Polyolefin/Metall gebildet sind. Dabei sind die beiden äußeren Schichten 6, 8 aus einem Kunststoffmaterial bzw. aus Polyolefin oder insbesondere aus Polyäthylen gebildet, wobei die mittlere Schicht 7 aus einem anderen Material, beispielsweise aus einem Metallgewebe, einem Metallband oder einem Glasgewebe besteht.

Ferner ist es möglich, daß die dritte Schicht 7 aus Cu besteht. Hierzu kann in der äußeren aus Kunststoff oder einem anderen Isolierwerkstoff bestehenden Schicht 8 oder 6 eine Durchdringung 13 vorgesehen sein, durch die ein leitfähiges Kabel 14 geführt wird, das die mittlere Cu-Schicht 7 bzw. das Kupferband mit Erde 15 verbindet. Damit die außen liegenden Schichten 6 oder 8 im Bereich der Durchdringung 13 nicht einreißen, ist ein Verstärkungselement bzw. eine Öse 17 eingesetzt, durch die das Kabel 14 geführt ist. Die Öse 17 kann auch auf einfache Weise in die Schichten 6, 7, 8 (Figur 2) eingeklipst werden. Ferner läßt sich auf einfache Weise die äußere Schicht durchstoßen und dann der leitfähige bzw. äußere leitfähige Teil der Schicht mit der Metallfolie in Verbindung bringen und das Kabel 14 an die Metallfolie heranführen. Die äußere Schicht kann in vorteilhafter Weise mit einer Graphitpigmentierung ausgestattet sein.

Nach einem anderen Beispiel ist es möglich, eine kleine Wurmschraube 17 in die Folie zu drücken, oder die obere Folie 8 mit einem Stempel so weit durchzudrücken, daß eine elektrische Verbindung zur mittleren Schicht 7 hergestellt wird. Das hat den Vorteil, daß die Folie 1 nicht nur zum Befestigen von Bauteilen eingesetzt werden kann sondern auch als Abschirmvorrichtung. Die Einrichtung dient in diesem Fall auch zur Vermeidung gegenseitiger Beeinflussung von Leitungen, Baugruppen, Geräten und Anlagen durch elektrische oder auch magnetische Felder. Hierzu dient in vorteilhafter Weise die zwischen den beiden äußeren Schichten 6, 8 vorgesehene Schicht 7', die vorzugsweise aus Al oder Cu, aber auch aus einem anderen geeigneten Werkstoff bestehen kann und elektrisch leitend mit Masse verbunden ist. Der Abschirmungseffekt beruht dabei auf einer Ladungsverschiebung, durch die die Hülle zur Äquipotentialfläche und damit das Hülleninnere feldfrei wird. Auf diese Weise erfüllt die Folie 1 mehrere Funktionen; sie dient einmal zur Befestigung von Bauteilen und Kabeln und kann gleichzeitig auch als Abschirm- oder Isoliereinrichtung eingesetzt werden. Ebenso kann das Verbundmaterial 11 nur als Abschirm- oder Isoliereinrichtung eingesetzt und mit den einzelnen Bauteilen verbunden werden.

In vorteilhafter Weise liegt die leitende Schicht 7', gemäß Fig. 2, zwischen den beiden aus Kunststoffmaterial bestehenden äußeren Schichten 6, 8. Je nach Anwendungsfall kann auch eine der äußeren Schichten 6, 8 leitend sein.

Gemäß Fig. 1 sind die beiden Schichten 6, 7 nicht leitend, obwohl es vorteilhaft sein kann, daß mindestens eine Schicht 6 oder 7 leitend ist.

Wie aus Figur 2 ferner hervorgeht, kann das Kabel 14 über einen Schließer 18 zusätzlich an einen Impulsgeber 19 angeschlossen werden, der mit einer Stromversorgung 20 verbunden sein kann. Auf diese Weise läßt sich insbesondere das erfindungsgemäß mehrschichtige Verbundmaterial 11 zur digitalen Übertragung von Nachrichten und Daten einsetzen, wobei die Daten im Impulsgeber moduliert werden.

Ferner ist es möglich, daß nur eine oder zwei Schichten eine unterschiedliche Festigkeit aufweisen. Weiterhin besteht die Möglichkeit, daß zwei Schichten aus Polyäthylen und die dritte Schicht aus einem kunststoffarmen bzw. kunststofffreien Material besteht. In vorteilhafter Weise ist die dritte Schicht 7 zwischen den beiden außen liegenden Kunststoffschichten 6 und 8 gemäß Figur 2 eingebettet.

Wie aus Figur 1 hervorgeht, weist die untere Schicht 6 zwei oder mehr klebfähige Streifen 5 auf, die in gleichmäßig parallelem Abstand zueinander angebracht sind und sich in Längsrichtung der Folie 1 erstrecken (vergleiche auch Figur 5).

Das Verbundmaterial 11 bzw. das Polyolefin-Material kann eine Stärke zwischen 0,035 mm und 0,5 mm, insbesondere zwischen 0,08 und 0,15 mm aufweisen.

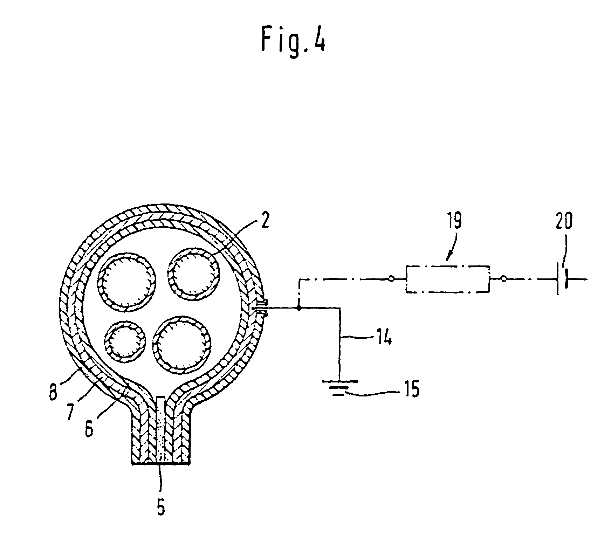

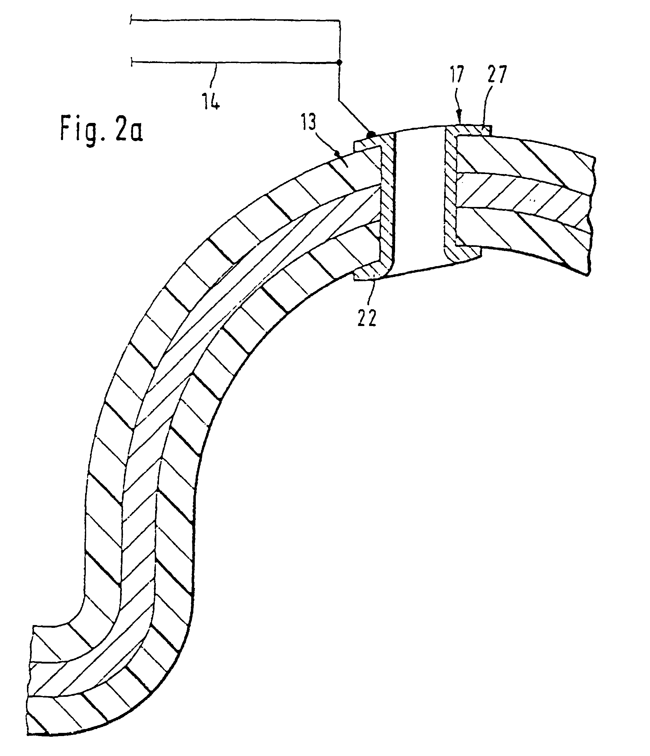

In Figur 4 ist ein dreischichtiger Verbund 11 dargestellt, wobei zwischen den beiden insbesondere aus Polyolefin bestehenden Schichten 6 und 8 die dritte Schicht 7 eingebettet ist, die aus Metall, insbesondere aus Al und/oder Cu bzw. aus einem Metallgewebeband, z.B. Kupfergewebe, bestehen kann.

Die Folie 1 (Figur 4) eignet sich als Abschirmeinrichtung für ein oder mehrere elektrisch leitende Kabel 2, z.B. als Kabelbaum. Sie ist so beweglich wie die Kabel selbst, daher ist ein Verlegen auch mit sehr verschlungenen Kabelführungen in Anpassung an schwierige räumliche Gegebenheiten möglich.

Hierzu kann die untere Schicht 6 auf der Innenseite mit einer durchgehenden Klebefläche 5 oder mit zwei oder mehreren, einen gleichmäßigen Abstand untereinander aufweisenden Klebeflächen 5 versehen sein, durch die die Leitungen 2 zusammengehalten oder auch auf der Oberfläche 3 des Bauteils oder Bodens 4 fixiert werden können.

Die Herstellung der Folie 1 kann auf unterschiedliche Weise erfolgen. Beispielsweise kann zuerst eine Folie aus Polyäthylenwerkstoff hergestellt und in einem zweiten Arbeitsschritt eine Metall- bzw. Aluminium- oder Kupferfolie bzw. Kupferbandgewebe aufgebracht werden, wobei als Bindemittel zwischen diese beiden Schichten im Schmelzgießverfahren ein flüssiger Polymerwerkstoff eingebracht wird. Dieser Polymerwerkstoff weist unterschiedliche Festigkeiten auf, so daß der beschriebene Einreißeffekt eintritt, wenn die Folie durchtrennt werden soll. Das seitliche Einreißen wird dann erleichert, wenn die gesamte Folie in kleinen Abständen mit seitlichen Kerben versehen oder gerippt ist. Ist die Folie als Kreuzlaminat ausgebildet, so entfällt dieser Vorteil, dagegen weist eine derartige Folie eine sehr hohe Widerstandsfähigkeit insbesondere eine hohe Reiß und Durchstoßfestigkeit auf.

Zwischen den beiden Schichten 6 und 8 können ein oder mehrere schmale Metallstreifen vorgesehen sein. Der Metallstreifen oder Metallfaden, erstreckt sich über die gesamte Länge der Befestigungseinrichtung bzw. Folie 1. Die Breite des Metallstreifens kann wesentlich kleiner sein als die Breite der beiden Schichten 6 und 8.

Die Folie 1 kann mit einer durchgehenden Klebefläche oder auch mit mindestens zwei parallel zueinander verlaufenden Klebestreifen oder auch mit zahlreichen mit Abstand zu einander angeordneten Klebestreifen versehen sein, die sich über die gesamte Länge der Folie erstrecken und parallel zueinander verlaufen. Sind beispielsweise mehr als 2 oder 3 Klebeflächen auf der Unterseite der Folie 1 vorgesehen, so können mit nur einer einzigen Folie 1 mehrere parallel nebeneinander verlaufende Kabelkanäle 12 auf der Unterlage bzw. dem Boden 4 gebildet werden.

Die gleiche Folie 1 kann auch als Abschirmeinrichtung eingesetzt werden, wenn sie bzw. eine Schicht der Folie abschirmende Eigenschaften aufweist. Diese Schicht kann als Zwischenschicht zwischen den äußeren und inneren Schichten 6, 8 gemäß Fig. 2 vorgesehen werden. Bei diesem Anwendungsfall ist es auch möglich, die Abschirmeigenschaften aufweisende Schicht als äußere Schicht vorzusehen. In einer anderen Variante können auch mehr als drei Schichten vorgesehen werden, wobei die Schichten abwechselnd als Abschirm- und als Isolierschichten ausgebildet sind.

Eine derart ausgebildete Folie kann in Nachbarschaft von elektrischen Leitungen mit niedriger oder hoher Spannung durch einfaches Überkleben auf festem Untergrund fixiert und zusätzlich als Isoliermaterial eingesetzt werden (Figur 5).

Ferner kann die Innenfolie bzw. die Metallfolie zwischen zwei Schichten auch durch Freilegen geerdet werden, um auf diese Weise Überspannungen abzuleiten. Ebenso kann sie als Spannungsträger für Signal- oder Kriechströme dienen.

Bei einem mehrschichtigen Aufbau sind beispielsweise folgende Schichtvariationen möglich: Bei einem 4-schichtigen Aufbau können die Schichten aus Polymer, Metall- oder Glasgewebe, wieder Polymer und aus einem Kleber bestehen.

Es ist auch möglich, Polymer, Metall- oder Glasgewebe, Polymer, Metall- oder Glasgewebe, Polymer und letztlich Kleber oder weitere Schichten vorzusehen.

Die einzelnen Schichten können entweder im Längs- oder im Kreuzverbund miteinander verbunden werden. Je nach Aufbau der einzelnen Schichten erhält man unterschiedliche Abschirm- und Isolierwerte. Durch derartig ausgebildete Folien lassen sich Steuer-, Meßstände und andere elektrische Einrichtungen auf einfachste Weise nachträglich abschirmen, ohne bauliche Veränderungen vornehmen zu müssen.

Durch die Kaschierung der Bleifolie mit Polymeren ergibt sich eine gut abziehbare, leicht zu verarbeitende Folie, die reiß- und bruchgeschützt ist. Außerdem wird das Freisetzen von Schadstoffen ausgeschlossen.

In vorteilhafter Weise kann der Kleber schwer entflammbar und selbstverlöschend ausgestattet sein.

Ferner ist es möglich, eine Polyolefin-Kreuzlaminierung einzusetzen und die Zwischenschicht, beispielsweise die Metallschicht, durch Polioschmelze zwischen den beiden spiralgereckten Polimerfilmen zu kaschieren.

Möglich ist auch, weitere Schichten in der beschriebenen Weise als Spiralfilm oder als spiralgeschnittene Flachbahn oder als komplettes Kreuzlaminat aufzubringen.

Durch besondere Zusätze bzw. Additive, beispielsweise metallische Additive, können die Polimere, insbesondere die Polyolefin-Filme elektrisch leitfähig gemacht werden. In vorteilhafter Weise lassen sich verschiedene Materialfilme bzw. Verbundfolien herstellen. Die nachstehend aufgeführten Beispiele können beliebig variiert werden.
1. Kreuzlaminat, Schmelze, Metall, Schmelze, Polyfilm, Kleber
2. Kreuzlaminat, Schmelze, Metall, Schmelze, Polyfilm, ohne Kleber,
3. Spiralflachfolie, Schmelze, Metall, Schmelze, Spiralflachfolie, Schmelze, mit und ohne Kleber,
4. Spiralflachfolie, Schmelze, Metall, Schmelze, Kreuzlaminat, Schmelze, mit oder ohne Kleber,
5. Ein Laminat bzw. eine Folie kann zusätzlich durch Kaschieren mit Papier oder Jute/Stoffgewebe auf einer oder beiden Außenflächen ergänzt und dann ähnlich wie eine Tapete verklebt und zur vollflächigen Abschirmung von Räumen verwendet werden. In diesem Fall ist die Folie mit einer Perforation (Lochung) zu versehen, damit die Wände atmen können. Die solcherart hergestellte Folie hat gegenüber herkömmlichen Metallfolien erhebliche Vorteile.

Zur Erzielung der beschriebenen Eigenschaften ist es vorteilhaft, einen Materialfilm aus mindestens zwei oder mehreren, in vorteilhafter Weise aus sieben Schichten mit folgender Stärke zu bilden:
1. Spiralfilm ca. 35 µm bis ca 60 µm,
2. Schmelze ca. 10 bis 15 µm,
3. Spiralfilm 35 bis 60 µm,
4. Kleberfilm 25 bis 50 gr/m² oder Kreuzlaminat 80 bis 130 µm,
5. Schmelze 10 bis 15 µm,
6. Metallfolie oder Gewebe 7 bis 200 µm,
7. Schmelze 10 bis 15 µm.

In der Zeichnung ist in den Figuren 6a-10 mit 1 die formbare bzw. elastische Folie zum Abschirmen von Strahlungen, Strömungen und/oder elektrischen Feldern und/oder zum Isolieren oder zur galvanischen Trennung von elektrisch leitenden oder leitfähigen Teilen Rohren oder elektrischen Leitungen 2 auf einer Unterlage 4 dargestellt, wobei zumindest eine Seite der Folie 1 zum Befestigen auf der Unterlage 4 mit einer klebfähigen Fläche 5 versehen ist.

Die in Figur 2 schematisch wiedergegebene formbare, aus mehreren Schichten 6,7' und 8 gebildete Folie, die zum Abschirmen von Strahlungen, Strömungen und/oder elektrischen Feldern und/oder zum Isolieren oder zur galvanischen Trennung von elektrisch leitenden Teilen oder leitfähigen Teilen und/oder zum Befestigen von Teilen oder von Bauteilen auf einer Unterlage bestimmt ist, ist in den Figuren 6a,7,8 und 9,10 im einzelnen veranschaulicht.

Die in Figur 2 abgebildete obere Schicht 8 ist als PE-Schicht ausgebildet und besteht gemäß Figur 11 aus zwei quer gestreckten Schichten 26a und 26b, die durch eine Polyo-Schmelze 25 miteinander verbunden sind, so daß in einem gewissen Bereich die beiden quer gestreckten Folien 26a und 26b sich gegeneinander verschieben können, wenn die Folien aufgrund unterschiedlicher Wärmeausdehnung oder Zugbeanspruchung sich in ihrer Länge verändern. Die Polyo-Schmelze 25 bildet also eine schwimmende Verbindung zwischen den beiden Schichten 26a und 26b sowie auch mit den übrigen miteinander verbundenen Schichten, wie nachfolgend näher erläutert wird.

Die gestreckte Schicht 26b (Figur 6a) ist ferner über eine weitere Polyo-Schmelze 33 mit der in Figur 2 mit 7' gekennzeichneten Metallfolie 24 verbunden. Auf der Unterseite der Metallfolie 24 befindet sich eine weitere Polyo-Schmelze 23, die zur Aufnahme des in Figur 2 mit 5, in Figur 11 mit 21 bezeichneten Klebers dient.

Der Kleber 5,21 kann entweder in Streifen oder ganzflächig auf der Unterseite der Polyo-Schmelze 23 aufgebracht sein. Gemäß Figur 2 und 6a kann der Kleber 5 bzw. in Figur 6a der Kleber 21 in zwei mit Abstand zueinander angeordneten Klebestreifen auf der Polyo-Schmelze 23 aufgebracht werden.

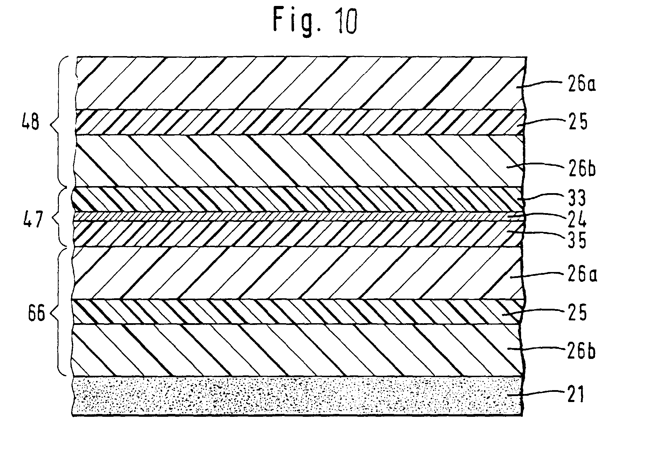

In Figur 10 ist ein weiterer Folienverbund 48,47,66 dargestellt, der insgesamt aus 10 Schichten besteht. Der obere Folienverbund 48 besteht aus den beiden über die Polyo-Schmelze 25 verbundenen Schichten 26a und 26b, daran schließt sich dann ein mittlerer Folienverbund 47 mit einer Polyo-Schmelze 33 und mit einer Metallfolie 24 an, die wiederum über eine Polyo-Schmelze 35 mit einem weiteren Folienverbund 66 verbunden ist. Der Folienverbund 66 besteht ebenfalls aus den beiden über die Polyo-Schmelze 25 verbundenen Schichten 26a und 26b. Auf der untersten bzw. äußeren Schicht 26b befindet sich wieder der Kleber 21, der entweder ganzflächig auf der Unterseite der Schicht 26b oder gemäß Figur 2 in mit Abstand zueinander angeordneten Streifen aufgebracht ist. Der Kleber 21 entspricht der Klebeschicht 5 in Figur 2.

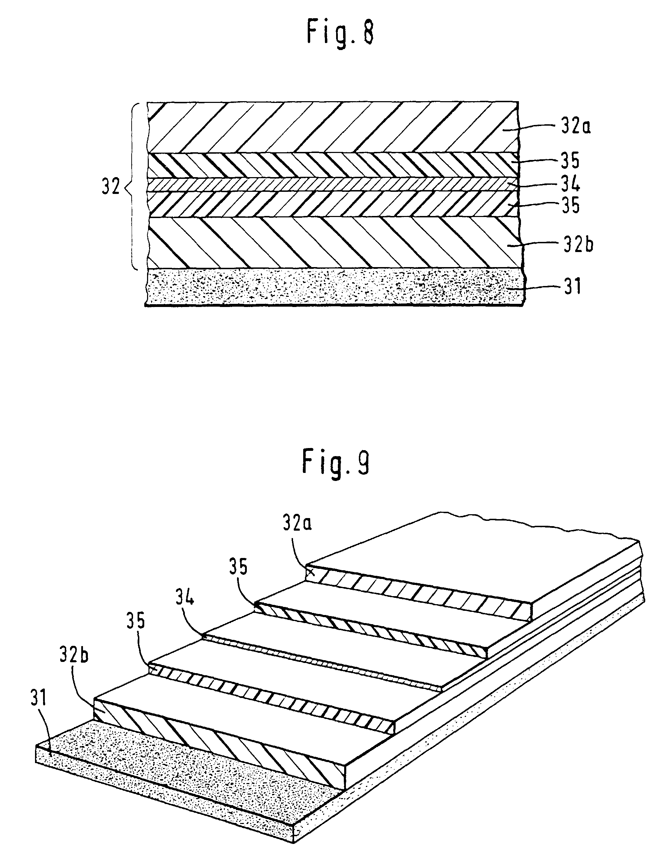

In Figur 9 ist nochmals der Folienverbund 32 aus Figur 8 in perspektivischer Darstellung wiedergegeben. Der Folienverbund 32 besteht aus einer oberen nicht gestreckten Schicht 32a, die über eine Polyo-Schmelze 35 Mit der Metallfolie 34 fest verbunden ist, die über eine Polyo-Schmelze 35 mit einer weiteren nicht gestreckten Schicht 32b fest verbunden ist. Die Schichten 32a und 32b entsprechen im wesentlichen den Schichten gemäß Figur 6 und 8. Auf der untersten Seite der Schicht 32b befindet sich der Kleber 31, der entweder in Streifen oder ganzflächig auf der Unterseite der Schicht 32b aufgebracht ist.

Figur 7 zeigt, daß eine der Schichten 26a mit einer Papierschicht 36 versehen ist, die über einen Kleber 37 auf der Schicht 26a haftet.

## Patentansprüche

1. Formbare aus mehreren Schichten (5, 6, 7', 8, 5, 6, 7, 26, 32) gebildete Folie (1) zum Abschirmen von Strahlungen, Strömungen und/oder elektrischen Feldern und/oder zum Isolieren oder zur galvanischen Trennung von elektrisch leitenden oder leitfähigen Teilen und/oder zum Befestigen von Teilen oder von Bauteilen, Rohren oder elektrischen Leitungen auf einer Unterlage, wobei eine äußere bzw. obere Schicht (67, 8, 26a, 32a) quer zur Längsseite bzw. zur Längsmittelachse der Folie (1) gestreckt ist und mindestens eine weitere, mit der ersten Mittel- oder unmittelbar verbundene Schicht (6, 26b, 32b) entgegengesetzt dazu, ebenfalls zur Längsmittelachse der Folie (1), derart gestreckt ist, daß die Strecklinien (41, 42) bzw. die dadurch ausgerichtete Molekularstruktur der Schichten sich in einem Winkel schneiden und eine der beiden Schichten einen ganzflächigen oder in Streifen aufgebrachten Kleber (21, 31, 5) aufweist und eine der Schichten (6, 26b, 32b) über eine Polyo-Schmelze (25) mit einer Metallschicht (7, 7') mittel- oder unmittelbar verbunden ist.

2. Befestigungseinrichtung nach Anspruch 1, dadurch gekennzeichnet, daß eine erste bzw. obere in eine Richtung quer zur Längsseite der Folie (1) gestreckte Schicht (8, 26a) über eine PE-Schmelze (25) mit der zweiten, entgegengesetzt zur ersten Schicht (26a) gestreckten Schicht (26b) miteinander verbundenen ist, die mittel- oder unmittelbar über eine PE-Schmelze (33) mit einer Metallschicht (7, 24) verbunden ist, wobei der Kleber (5) über eine PE-Schmelze mit einem der beiden Schichten (6, 8) verbunden ist.

3. Befestigungseinrichtung nach Anspruch 1, dadurch gekennzeichnet, daß zwischen zwei entgegengesetzt gestreckten Schichten (32a, 32b) die Metallschicht (7) vorgesehen ist, die beiderseits über die PE-Schmelze (35) mit den Schichten verbunden ist, wobei eine der Schichten (32b) den Kleber (31) trägt.

4. Befestigungseinrichtung nach Anspruch 1, dadurch gekennzeichnet, daß nach zwei entgegengesetzt gestreckten Schichten (26a, 26b) die Metallschicht (24) vorgesehen ist, die über die PE-Schmelze (33) mit den oberen Schichten (26b) verbunden ist und über eine weitere PE-Schmelze (35) mit zwei weiteren entgegengesetzt gestreckten Schichten (26a, 26b) verbunden ist, wobei die eine außen liegende Schicht (26b) den Kleber (21) trägt.

5. Befestigungseinrichtung nach Anspruch 1, **dadurch gekennzeichnet**, daß auf der Unterseite der einen Schicht (6) der Folie mindestens zwei mit Abstand zueinander angeordnete klebfähige Flächen (5) vorgesehen sind, wobei die fest miteinander verbundenen Schichten (6, 7) als Kreuz- laminierung ausgebildet sind.

6. Befestigungseinrichtung nach Anspruch 1, **dadurch gekennzeichnet**, daß auf der Unterseite der einen Schicht (6) der Folie mindestens zwei mit Abstand zueinander angeordnete, sich über die gesamte Länge der Folie erstreckende, parallel verlaufende klebfähige Flächen (5) vorgesehen sind.

7. Befestigungseinrichtung nach Anspruch 1, **dadurch gekennzeichnet**, daß auf der Unterseite der einen Schicht (6) der Folie eine auf eine Oberfläche eines zu befestigenden Teils rückstandsfrei aufbringbare Klebefläche (5) vorgesehen ist, und der Klebewerkstoff des klebfähigen Streifens (10) aus einem Stoffgemisch besteht, wobei zur Haftung des Klebstoffs auf der Schicht (6) der Folie die Gefügestruktur der Schicht (6) durch Koronaentladung vorbehandelt ist.

8. Befestigungseinrichtung nach Anspruch 1, **dadurch gekennzeichnet**, daß zumindest die eine Schicht der Folie (1) aus einem Kunststoffmaterial, oder aus einem Polymerwerkstoff bzw. aus einem Polymerwerkstoffgewebe gebildet ist.

9. Befestigungseinrichtung nach einem oder mehreren der vorhergehenden Ansprüche, **dadurch gekennzeichnet**, daß die formbare und/oder elastisch ausgebildete Folie (1) mit ihren beiden klebfähigen Streifen (5) auf der Oberfläche eines feststehenden Teils, bzw. auf der Oberfläche des Bodens (4) befestigbar ist und die klebfähigen Streifen (5) derart mit Abstand zueinander angeordnet sind, daß der mittlere bzw. der zwischen den klebfähigen Streifen (5) liegende Teil zur Aufnahme von Rohren, Kabeln oder anderen Bauteilen einen in der Höhe und/oder Breite veränderbaren Aufnahmeraum (12) bildet.

10. Befestigungseinrichtung nach Anspruch 1 oder 2, **dadurch gekennzeichnet**, daß die Folie (1) aus einem Verbundlaminat oder aus einem Polyäthylen-Verbundlaminat bzw. Polyäthylen-Verbundlminatgewebe besteht.

11. Befestigungseinrichtung nach Anspruch 1, **dadurch gekennzeichnet**, daß die Schichten (6, 7, 8) der Folie (1) aus einem eine unterschiedliche Festigkeit aufweisenden Verbundlaminat gebildet sind.

12. Befestigungseinrichtung nach einem oder mehreren der vorhergehenden Ansprüche, **dadurch gekennzeichnet**, daß die Folie (1) aus drei Schichten (6, 7, 8) gebildet ist, wobei mindestens zwei Schichten untereinander oder zur dritten Schicht eine unterschiedliche Festigkeit aufweisen.

13. Befestigungseinrichtung nach Anspruch 6, **dadurch gekennzeichnet**, daß zwei Schichten (6, 8) aus Polyäthylen und die dritte Schicht (7) aus einem kunststoffarmen bzw. kunststofffreien Material besteht.

14. Befestigungseinrichtung nach Anspruch 1 und 6 oder 8, **dadurch gekennzeichnet**, daß zumindest die mittlere Schicht (7) zur Abschirmung bzw. zur Behinderung der Wirkungsausbreitung von Strahlungen, elektrischen Feldern und/oder Strömungen aus einem Metallwerkstoff besteht.

15. Befestigungseinrichtung nach Anspruch 6, **dadurch gekennzeichnet**, daß zumindest eine Schicht bzw. die dritte Schicht (7) zur Abschirmung bzw. zur Behinderung der Wirkungsausbreitung von Strahlungen, Feldern und/oder Strömungen oder zur galvanischen Trennung von elektrisch leitenden oder leitfähigen Teilen zumindest teilweise aus einem Glas-, Polyacrylharz-, Polyäthylen- oder einen Paraffinwerkstoff und/oder entsprechendem Gewebe besteht.

16. Befestigungseinrichtung nach Anspruch 6, **dadurch gekennzeichnet**, daß die dritte Schicht (7), oder die Metall enthaltende Schicht, zwischen den beiden außen liegenden Kunststoffschichten (6, 8) eingebettet ist.

17. Befestigungseinrichtung nach einem oder mehreren der vorhergehenden Ansprüche, **dadurch gekennzeichnet**, daß die dritte Schicht (7) aus einem Metallgewebe, oder aus einem Kupfergewebe besteht.

18. Befestigungseinrichtung nach einem oder mehreren der vorhergehenden Ansprüche, **dadurch gekennzeichnet**, daß die unterste und/oder die oberste Schicht (6, 7, oder 8) zwei oder mehrere mit Abstand zueinander angeordnete, klebfähige Streifen (5) aufweist, wobei die einzelnen Abstände gleich oder unterschiedlich groß sind.

19. Befestigungseinrichtung nach Anspruch 6, **dadurch gekennzeichnet**, daß der Aufnahmeraum von elektrischen Leitungen als Bauteilkanal, oder als Kabelkanal (12), ausgebildet bzw. formbar ist.

20. Befestigungseinrichtung nach einem oder mehreren der vorhergehenden Ansprüche, **dadurch gekennzeichnet**, daß im Bereich des Aufnahmeraumes bzw. Kabelkanals (12) ein dritter klebfähiger Streifen (10) vorgesehen ist, der mit einem im Aufnahmeraum (12) vorgesehenen Bauteil verbindbar ist.

21. Befestigungseinrichtung nach einem oder mehreren der vorhergehenden Ansprüche, **dadurch gekennzeichnet**, daß der klebfähige Streifen (10) eine Breite zwischen 5 und 50 mm aufweist.

22. Befestigungseinrichtung nach einem oder mehreren der vorhergehenden Ansprüche, **dadurch gekennzeichnet**, daß der Klebewerkstoff des klebfähigen Streifens (10) aus einem Stoffgemisch besteht, das Acrylklebstoffanteile enthält, wobei die Lösungsmittelbestandteile unter 1% liegen.

23. Befestigungseinrichtung nach einem oder mehreren der vorhergehenden Ansprüche, **dadurch gekennzeichnet**, daß der Klebewerkstoff des klebfähigen Streifens (10) UV-beständig ist.

24. Befestigungseinrichtung nach einem oder mehreren der vorhergehenden Ansprüche, **dadurch gekennzeichnet**, daß das Verbundmaterial (11) bzw. die beiden äußeren Schichten (6, 8) der Folie (1) aus Polyolefin-Material bestehen und elektrisch leitfähig ausgebildet sowie mit einer zweiten Metallschicht verbindbar sind.

25. Befestigungseinrichtung nach einem oder mehreren der vorhergehenden Ansprüche, **dadurch gekennzeichnet**, daß die Folie (1) bzw. das Verbundmaterial (11) eine Dicke bis zu 200 µ aufweist.

26. Befestigungseinrichtung nach einem oder mehreren der vorhergehenden Ansprüche, **dadurch gekennzeichnet**, daß das Verbundmaterial (11) bzw. die Folie (1) als Mehrschichtfolie mit mehr als drei Schichten ausgebildet ist, wobei zwischen jeweils zwei Kunststoffschichten eine weitere, leitende Schicht vorgesehen ist, die gleich oder kleiner als die Dicke des Verbundmaterials ist.

27. Befestigungseinrichtung nach einem oder mehreren der vorhergehenden Ansprüche, **dadurch gekennzeichnet**, daß die Folie (1) auf einer oder beiden Seiten mit einer Kaschierung aus Papier und/oder Stoffgewebe versehen ist.

28. Befestigungseinrichtung nach einem oder mehreren der vorhergehenden Ansprüche, **dadurch gekennzeichnet**, daß zumindest eine Schicht oder alle Schichten (6 oder 8) der Folie (1) mit einer Lochung versehen sind.

29. Befestigungseinrichtung nach einem oder mehreren der vorhergehenden Ansprüche, **dadurch gekennzeichnet**, daß eine Schicht (7) aus Metall und die zweite und/oder dritte Schicht (6, 8) aus Polyester, Polyäthylen oder Polyolefine im Kreuz- laminat auf die Nachbarschicht aufgebracht ist, wobei die Schichten flammhemmende Zusätze aufweisen.

30. Befestigungseinrichtung nach einem oder mehreren der vorhergehenden Ansprüche, **dadurch gekennzeichnet**, daß zumindest eine Schicht bzw. das Polyäthylenmaterial eine Stärke zwischen 0,035 mm und 0,5 mm, oder eine Stärke zwischen 0,08 mm und 0,15 mm aufweist.

31. Befestigungseinrichtung nach einem oder mehreren der vorhergehenden Ansprüche, **dadurch gekennzeichnet**, daß das Stoffgemisch aus einem Acrylwerkstoff mit einem Lösungsmittel unter 1% oder einer Acryldispersion besteht, wobei das Flächengewicht zwischen 20 und 70 gr/m² oder zwischen 25 und 50 gr/m², vorzugsweise 30 gr/m² beträgt.

32. Befestigungseinrichtung nach einem oder mehreren der vorhergehenden Ansprüche, **dadurch gekennzeichnet**, daß die Folie (1) aus einem Mehrschichtensystem mit folgendem Schichtaufbau besteht:
1.
Spiralfilm mit einer Stärke zwischen 35 µm und 60 µm,
2.
Schmelze mit einer Stärke zwischen 10 µm und 15 µm,
3.
Spiralfilm mit einer Stärke zwischen 35 µm und 60 µm,
4.
Kleber mit einer Stärke zwischen 25 und 50 gr/m²,

33. Befestigungseinrichtung nach einem oder mehreren der vorhergehenden Ansprüche, **dadurch gekennzeichnet**, daß daß die Folie (1) aus einem Mehrschichtensystem mit folgendem Schichtaufbau besteht:
1. Spiralfilm mit einer Stärke zwischen 35 µm und 60 µm,
2. Schmelze mit einer Stärke zwischen 10 µm und 15 µm oder Kleber mit einer Stärke zwischen 25 und 50 gr/m²,
3. Metallfilm mit einer Stärke zwischen 7 µm und 200 µm,
4. Schmelze mit einer Stärke zwischen 10 µm und 15 µm,
5. Spiralfilm mit einer Stärke zwischen 35 µm und 60 µm,
6. Kleber mit einer Stärke zwischen 25 und 50 gr/m²,

34. Befestigungseinrichtung nach einem oder mehreren der vorhergehenden Ansprüche, **dadurch gekennzeichnet**, daß daß die Folie (1) aus einem Mehrschichtensystem mit folgendem Schichtaufbau besteht:
1. Kreuzlaminat mit einer Stärke zwischen 80 µm und 130 µm, wobei das Kreuzlaminat aus zwei Polyolefinwerkstoff-Laminaten besteht, die über eine Schmelze miteinander verbunden sind,
2. Schmelze mit einer Stärke zwischen 10 µm und 15 µm,
3. Metallfolie oder Metallfoliengewebe mit einer Stärke zwischen 7 µm und 200 µm
4. Schmelze mit einer Stärke zwischen 10 µm und 15 µm,
5. Spiralfilm mit einer Stärke zwischen 35 µm und 60 µm, der aus einem Polyolefinwerkstoff besteht,
6. Schmelze mit einer Stärke zwischen 10 µm und 15 µm oder Kleber mit einer Stärke zwischen 25 und 50 gr/m²,

35. Befestigungseinrichtung nach einem oder mehreren der vorhergehenden Ansprüche, **dadurch gekennzeichnet**, daß daß die Folie (1) aus einem Mehrschichtensystem mit folgendem Schichtaufbau besteht:
1. Kleber mit einer Stärke zwischen 25 und 50 gr/m²,
2. Kreuzlaminat mit einer Stärke zwischen 80 µm und 130 µm,
3. Schmelze mit einer Stärke zwischen 10 µm und 15 µm,
4. Metallfolie oder Metallfoliengewebe mit einer Stärke zwischen 7 µm und 200 µm,
5. Schmelze mit einer Stärke zwischen 10 µm und 15 µm,
6. Polyolefinwerkstoff mit einer Stärke zwischen 10 µm und 15 µm,

## Claims

1. Moldable film (1) consisting of multiple layers (5, 6, 7', 8, 5, 6, 7, 26, 32) for shielding from radiation, flows and/or electric fields, and/or for insulation or for the galvanic separation of electrically conducting or conductive parts and/or for fastening parts or components, pipes or electric lines to a base, whereby an outer or upper layer (67, 8, 26a, 32a) is drawn perpendicular to the lengthwise side or to the longitudinal central axis of the film (1) and at least another layer (6, 26b, 32b) that is joined directly or indirectly with the first layer in the opposite direction, likewise with respect to the longitudinal central axis of the film (1), is drawn in such a way that the drawing lines (41, 42) or the resultant oriented molecular structure of the layers intersect each other at an angle and one of the two layers has an adhesive (21, 31, 5) applied over its entire surface or else in strips, and one of the layers (6, 26b, 32b) is joined directly or indirectly with a metal layer (7, 7') by means of a polyo-melt (25).

2. Fastening device according to Claim 1, characterized in that a first or upper layer (8, 26a) drawn in a direction crosswise to the lengthwise side of the film (1) is joined by means of a PE melt (25) to the second layer (26b), which is drawn in the opposite direction from the first layer (26a), and said second layer (26b) is directly or indirectly joined by means of a PE melt (33) to a metal layer (7, 24), whereby the adhesive (5) is joined with one of the two layers (6, 8) by means of a PE melt.

3. Fastening device according to Claim 1, characterized in that, between two layers (32a, 32b) drawn in opposite directions, there is a metal layer (7) that is joined on both sides with the layers by means of the PE melt (35), whereby one of the layers (32b) bears the adhesive (31).

4. Fastening device according to Claim 1, characterized in that, after two layers (26a, 26b) drawn in opposite directions, there is a metal layer (24) that is joined with the upper layers (26b) by means of a PE melt (33) and that is joined with two more layers (26a, 26b) drawn in opposite directions by means of another PE melt (35), whereby the outer layer (26b) bears the adhesive (21).

5. Fastening device according to Claim 1, characterized in that, on the underside of one layer (6) of the film, there are at least two adhesive surfaces (5) placed at a distance from each other, and the layers (6, 7) permanently joined with one another are designed as a crosswise laminate.

6. Fastening device according to Claim 1, characterized in that, on the underside of one layer (6) of the film, there are at least two adhesive surfaces (5) which run parallel to each other, which are placed at a distance from one another and which extend over the entire length of the film.

7. Fastening device according to Claim 1, characterized in that, on the underside of one layer (6) of the film, there is an adhesive layer (5) that can be applied residue-free to a surface of a part to be fastened, and the adhesive material of the adhesive strip (10) consists of a material mixture, whereby the structure of the layer (6) is pretreated by corona discharge for purposes of adhesion of the adhesive to the layer (6) of the film.

8. Fastening device according to Claim 1, characterized in that at least one layer of the film (1) is made of a plastic material, or of a polymer material or of a polymer fabric.

9. Fastening device according to one or more of the preceding Claims, characterized in that the moldable and/or elastically formed film (1) can be fastened with its two adhesive strips (5) to the surface of a stationary part or to the surface of the base (4) and that the adhesive strips (5) are arranged at such a distance from one another that the middle part or the part lying between the adhesive strips (5) forms a receiving space (12) that can be changed in height and/or width for purposes of accommodating pipes, cables or other components.

10. Fastening device according to Claim 1 or 2, characterized in that the film (1) consists of a composite laminate or of a polyethylene composite laminate or a polyethylene composite laminate fabric.

11. Fastening device according to Claim 1, characterized in that the layers (6, 7, 8) of the film (1) are made of a composite laminate having different strength levels.

12. Fastening device according to one or more of the preceding Claims, characterized in that the film (1) is made of three layers (6, 7, 8), whereby at least two of the layers exhibit a different strength with respect to each other or to the third layer.

13. Fastening device according to Claim 6, characterized in that two of the layers (6, 8) consist of polyethylene and the third layer (7) consists of a low-plastic or plastic-free material.

14. Fastening device according to Claims 1 and 6 or 8, characterized in that at least the middle layer (7) used for shielding or for hindering the propagation of the action of radiation, electric fields and/or flows consists of a metal material.

15. Fastening device according to Claim 6, characterized in that at least one layer or the third layer (7) for shielding or for hindering of the propagation of the action of radiation, fields and/or flows or for the galvanic separation of electrically conducting or conductive parts is composed at least partially of a glass, polyacrylate resin, polyethylene or paraffin material and/or corresponding fabric.

16. Fastening device according to Claim 6, characterized in that the third layer (7), or the layer containing metal, is embedded between the two outer plastic layers (6, 8).

17. Fastening device according to one or more of the preceding Claims, characterized in that the third layer (7) consists of a metal fabric, especially of a copper fabric.

18. Fastening device according to one or more of the preceding Claims, characterized in that the lowermost and/or the topmost layer (6, 7 or 8) has two or more adhesive strips (5) placed at a distance from one another, whereby the individual distances are the same or different.

19. Fastening device according to Claim 6, characterized in that the receiving space of the electric lines is designed or moldable as a component conduit, especially as a cable conduit (12).

20. Fastening device according to one or more of the preceding Claims, characterized in that, in the area of the receiving space or cable conduit (12), there is a third adhesive strip (10) which can be joined with a component provided in the receiving space (12).

21. Fastening device according to one or more of the preceding Claims, characterized in that the adhesive strip (10) has a width between 5 mm and 50 mm.

22. Fastening device according to one or more of the preceding Claims, characterized in that the adhesive material of the adhesive strip (10) consists of a material mixture containing acrylic adhesive fractions, whereby the solvent components are under 1 percent.

23. Fastening device according to one or more of the preceding Claims, characterized in that the adhesive material of the adhesive strip (10) is UV-resistant.

24. Fastening device according to one or more of the preceding Claims, characterized in that the composite material (11) or the two outer layers (6, 8) of the film (1) consist of polyolefin material and are made electrically conductive as well as joinable with a second metal layer.

25. Fastening device according to one or more of the preceding Claims, characterized in that the film (1) or the composite material (11) has a thickness of up to 200 µm.

26. Fastening device according to one or more of the preceding Claims, characterized in that the composite material (11) or the film (1) is designed as a multilayer film with more than three layers, and between each two plastic layers, another, conducting layer is provided, whose thickness is the same as or smaller than the thickness of the composite material.

27. Fastening device according to one or more of the preceding Claims, characterized in that the film (1) has a lamination of paper and/or fabric on one or both sides.

28. Fastening device according to one or more of the preceding Claims, characterized in that at least one of the outer layers (6 or 8) of the film (1) has a perforation.

29. Fastening device according to one or more of the preceding Claims, characterized in that a layer (7) made of metal and the second and/or third layer (6, 8) made of polyester, polyethylene or polyolefin is applied as a crosswise laminate to the adjacent layer, whereby the layers contain flame-retardant additives.

30. Fastening device according to one or more of the preceding Claims, characterized in that at least one layer or the polyethylene material has a thickness of between 0.035 mm and 0.5 mm, or a thickness between 0.08 mm and 0.15 mm.

31. Fastening device according to one or more of the preceding Claims, characterized in that the material mixture consists of an acrylic material with a solvent content under 1 percent or of an acrylic dispersion, whereby the weight per unit area is between 20 and 70 g/m² or between 25 and 50 g/m², preferably 30 g/m².

32. Fastening device according to one or more of the preceding Claims, characterized in that the film (1) consists of a multilayer system with the following layer structure:
1. a spiral film with a thickness between 35 µm and 60 µm,
2. a melt with a thickness between 10 µm and 15 µm,
3. a spiral film with a thickness between 35 µm and 60 µm,
4. an adhesive with a thickness between 25 and 50 g/m².

33. Fastening device according to one or more of the preceding Claims, characterized in that the film (1) consists of a multilayer system with the following layer structure:
1. a spiral film with a thickness between 35 µm and 60 µm,
2. a melt with a thickness between 10 µm and 15 µm or an adhesive with a thickness between 25 and 50 g/m²,
3. a metal foil with a thickness between 7 µm and 200 µm,
4. a melt with a thickness between 10 µm and 15 µm,
5. a spiral film with a thickness between 35 µm and 60 µm,
6. an adhesive with a thickness between 25 and 50 g/m².

34. Fastening device according to one or more of the preceding Claims, characterized in that the film (1) consists of a multilayer system with the following layer structure:
1. a crosswise laminate with a thickness between 80 µm and 130 µm, whereby the crosswise laminate consists of two polyolefin material laminates, which are joined with one another by a melt,
2. a melt with a thickness between 10 µm and 15 µm,
3. a metal foil or metal foil fabric with a thickness between 7 µm and 200 µm,
4. a melt with a thickness between 10 µm and 15 µm,
5. a spiral film, which consists of a polyolefin material with a thickness between 35 µm and 60 µm,
6. a melt with a thickness between 10 µm and 15 µm or adhesive with a thickness between 25 and 50 g/m².

35. Fastening device according to one or more of the preceding Claims, characterized in that the film (1) consists of a multilayer system with the following layer structure:
1. an adhesive with a thickness between 25 and 50 g/m²,
2. a crosswise laminate with a thickness between 80 µm and 130 µm,
3. a melt with a thickness between 10 µm and 15 µm,
4. a metal foil or metal foil fabric with a thickness between 7 µm and 200 µm,
5. a melt with a thickness between 10 µm and 15 µm,
6. a polyolefin material with a thickness between 10 and 15 µm.

## Revendications

1. Feuille formable (1) constituée par plusieurs couches (5, 6, 7', 8, 5, 6, 7, 26, 32) destinée à faire blindage aux rayonnements, aux courants et/ou aux champs électriques, et/ou destininée à l'isolement ou à la séparation galvanique de pièces électroconductrices ou à pouvoir électroconducteur, et/ou à la fixation de pièces ou de composants, de tuyautages ou de conduites électriques sur un support, une couche extérieure ou supérieure (67, 8, 26a, 32a) étant étirée dans le sens transversal au côté longitudinal, à savoir à l'axe médian longitudinal de la feuille (1), et au moins une autre feuille (6, 26b, 32b) qui est directement ou indirectement liée à la première étant étirée dans le sens opposé, également par rapport à l'axe médian longitudinal de la feuille (1), de sorte que les lignes d'étirage (41, 42), à savoir la structure moléculaire des couches ainsi orientée, se recoupent en formant un angle, et l'une des deux couches étant dotée d'une colle (21, 31, 5) appliquée d'un seul tenant ou par bandes, et l'une des couches (6, 26b, 32b) étant unie directement ou indirectement à une couche métallique (7, 7') par l'intermédiaire d'une masse fondue polymère (25).

2. Dispositif de fixation selon la revendication 1, **caractérisé en ce qu'** une première couche ou couche supérieure (8, 26a) étirée transversale-ment au côté longitudinal de la feuille (1) est unie par une masse fondue de PE (25) à la deuxième couche (26b) étirée dans le sens opposé à la première, cette deuxième couche étant reliée elle-même directement ou indirectement par une masse fondue de PE (33) à une couche métallique (7, 24), la colle (5) étant unie à l'une des deux couches (6, 8) par une masse fondue de PE.

3. Dispositif de fixation selon la revendication 1, **caractérisé en ce que la** couche métallique (7) est prévue entre deux couches (32a, 32b) étirées dans des sens opposés, ladite couche métallique étant unie des deux cô-tés aux couches par une masse fondue de PE (35), l'une des couches (32b) portant la colle (31).

4. Dispositif de fixation selon la revendication 1, **caractérisé en ce que** après deux couches (26a, 26b) qui sont étirées dans des sens opposés, est prévue la couche métallique (24) qui est unie aux couches supérieures (26b) par la masse fondue de PE (33), et à deux autres couches (26a, 26b) étirées dans des sens opposés par une autre masse fondue de PE (35), l'une des couches extérieure (26b) portant la colle (21).

5. Dispositif de fixation selon la revendication 1, **caractérisé en ce que** sur la face inférieure de l'une des couches (6) de la feuille sont disposées au moins deux surfaces adhésives (5) espacées l'une de l'autre, les couches (6, 7) fermement solidaires l'une de l'autre constituant un stratifié en croisé.

6. Dispositif de fixation selon la revendication 1, **caractérisé en ce que** sur la surface inférieure de l'une des couches (6) se trouvent au moins deux surfaces adhésives (5) espacées l'une de l'autre et parcourant la feuille sur toute sa longueur en un tracé parallèle.

7. Dispositif de fixation selon la revendication 1, **caractérisé en ce que** sur la face inférieure de l'une des couches (6) de la feuille est prévue une surface adhésive (5) qui peut être appliquée sur la surface de la pièce à fixer sans laisser de traces, et que la colle de la bande adhésive (10) consiste en un mélange de substances, et que pour assurer l'adhérence de la colle sur la couche (6) de la feuille, la structure de la feuille (6) a subi un pré-traitement par décharge corona.

8. Dispositif de fixation selon la revendication 1, **caractérisé en ce que** au moins l'une des couches de la feuille (1) consiste en une matière plastique ou en un matériau polymère, à savoir en un tissu de matériau polymère.

9. Dispositif de fixation selon l'une ou plusieurs des revendications ci-avant, **caractérisé en ce que** la feuille (1) formable et/ou élastique peut être fixée au moyen de ses deux bandes adhésives (5) sur la surface d'une pièce fixe, ou sur la surface d'un sol (4), et que les bandes adhésives (5) sont disposées avec un écart tel que la partie du milieu, à savoir la partie comprise entre les deux bandes adhésives (5) constitue un espace (12) variable en hauteur et/ou en largeur pour la réception de tuyaux, de câbles ou d'autres composants.

10. Dispositif de fixation selon la revendication 1 ou 2, **caractérisé en ce que** la feuille (1) consiste en un stratifié composite ou en un stratifié composite de polyéthylène ou en un tissu stratifié composite de polyéthylène.

11. Dispositif de fixation selon la revendication 1, **caractérisé en ce que** les couches (6, 7, 8) de la feuille (1) sont constituées par un stratifié composite faisant état de valeurs de résistance mécanique différentes.

12. Dispositif de fixation selon l'une ou plusieurs des revendications ci-avant, **caractérisé en ce que** la feuille (1) est constituée par trois couches (6, 7, 8) dont au moins deux présentent ou bien entre elles, ou bien par rapport à la troisième couche, des valeurs de résistance mécanique différentes.

13. Dispositif de fixation selon la revendication 6, **caractérisé en ce que** deux couches (6, 8) sont en polyéthylène, et la troisième couche (7) en un matériau contenant très peu de matière plastique ou totalement exempt de matière plastique.

14. Dispositif de fixation selon l'une quelconque des revendications 1, 6 ou 8, **caractérisé en ce que** au moins la couche du milieu (7) destinée à faire blindage ou obstacle à la propagation de rayonnements, de champs électriques et/ou de courants consiste en un matériau métallique.

15. Dispositif de fixation selon la revendication 6, **caractérisé en ce que** au moins une couche, ou la troisième couche (7) destinée à faire blindage ou obstacle à la propagation de rayonnements, de champs et/ou de courants, ou à la séparation galvanique de pièces électroconductrices ou à pouvoir électroconducteur est fabriquée, tout du moins en partie, en un matériau de verre, de résine polyacrylique, de polyéthylène ou de paraffine et/ou en un tissu correspondant.

16. Dispositif de fixation selon la revendication 6, **caractérisé en ce que** la troisième couche (7) ou la couche contenant du métal, est prise en sandwich entre les deux couches en matière plastique (6, 8) qui se trouvent à l'extérieur.

17. Dispositif de fixation selon l'une ou plusieurs des revendications ci-avant, **caractérisé en ce que** la troisième couche (7) consiste en un tissu métallique ou en un tissu de cuivre.

18. Dispositif de fixation selon l'une ou plusieurs des revendications ci-avant, **caractérisé en ce que** la couche inférieure et/ou la couche supérieure (6, 7 ou 8) présente deux ou plusieurs bandes adhésives (5) espacées les unes des autres, les espaces étant égaux ou de grandeurs variables.

19. Dispositif de fixation selon la revendication 6, **caractérisé en ce que** l'espace dans lequel sont réceptionnées les conduites électriques a ou peut reçevoir la forme d'un conduit pour le logement de composants ou d'un caniveau de câblage (12).

20. Dispositif de fixation selon l'une ou plusieurs des revendications ci-avant, **caractérisé en ce qu'** une troisième bande adhésive (10) est prévue dans la zone de l'espace pour le logement des composants ou du caniveau de câblage (12) laquelle peut être reliée à un composant logé dans l'espace (12).

21. Dispositif de fixation selon l'une ou plusieurs des revendications ci-avant, **caractérisé en ce que** la bande adhésive (10) présente une largeur comprise entre 5 et 50 mm.

22. Dispositif de fixation selon l'une ou plusieurs des revendications ci-avant, **caractérisé en ce que** la colle de la bande adhésive (10) consiste en un mélange de substances contenant des parts de colle acrylique, la teneur en solvant étant inférieure à 1%.

23. Dispositif de fixation selon l'une ou plusieurs des revendications ci-avant, **caractérisé en ce que** la colle de la bande adhésive (10) est stable aux UV.

24. Dispositif de fixation selon l'une ou plusieurs des revendications ci-avant, **caractérisé en ce que** le matériau composite (11), à savoir les deux couches extérieures (6, 8), de la feuille (1) consistent en matière de polyoléfine et sont rendues électroconductrices, et peuvent être unies à une deuxième couche métallique.

25. Dispositif de fixation selon l'une ou plusieurs des revendications ci-avant, **caractérisé en ce que** la feuille (1), à savoir le matériau composite (11), présente une épaisseur pouvant aller jusqu'à 200 µ.

26. Dispositif de fixation selon l'une ou plusieurs des revendications ci-avant, **caractérisé en ce que** le matériau composite (11), à savoir la feuille (1) consiste en une feuille multicouche comportant plus de trois couches, auquel cas entre deux couches de matière plastique est prévue à chaque fois une autre couche conductrice dont l'épaisseur est égale ou inférieure à celle du matériau composite.

27. Dispositif de fixation selon l'une ou plusieurs des revendications ci-avant, **caractérisé en ce que** la feuille (1) est dotée de l'un des deux côtés d'un couchage de papier ou de tissu.

28. Dispositif de fixation selon l'une ou plusieurs des revendications ci-avant, **caractérisé en ce que** au moins une couche ou toutes les couches (6 ou 8) de la feuille (1) sont dotées d'une perforation.

29. Dispositif de fixation selon l'une ou plusieurs des revendications ci-avant, **caractérisé en ce qu'** une couche (7) de métal et la deuxième et/ou la troisième couche (6, 8) de polyester, polyéthylène ou polyoléfine sont appliquées par stratification en croisé sur la couche voisine, les couches étant dotées d'agents retardant la combustion.

30. Dispositif de fixation selon l'une ou plusieurs des revendications ci-avant, **caractérisé en ce que** au moins une couche, à savoir le matériau de polyéthylène, présente une épaisseur comprise entre 0,035 mm et 0,5 mm ou une épaisseur comprise entre 0,08 mm et 0,15 mm.

31. Dispositf de fixation selon l'une ou plusieurs des revendications ci-avant, **caractérisé en ce** que le mélange de substances consiste en un matériau acrylique avec une teneur en solvant inférieure à 1%, ou en une dispersion acrylique, le poids au mètre carré se situant entre 20 et 70 gr/m² ou entre 25 et 50 gr/m², de préférence à 30 gr/m².

32. Dispositif de fixation selon l'une ou plusieurs des revendications ci-avant, **caractérisé en ce que** la feuille (1) consiste en un système multicouche dont la structure est la suivante:
1.
Film en spirale d'une épaisseur comprise entre 35 et 60 µm.
2.
Masser fondue d'une épaisseur comprise entre 10 et 15 µm.
3.
Film en spirale d'une épaisseur comprise entre 35 et 60 µm.
4.
Colle d'une épaisseur comprise entre 25 et 50 gr/m².

33. Dispositif de fixation selon l'une ou plusieurs des revendications ci-avant, **caractérisé en ce que** la feuille (1) consiste en un système multicouche dont la structure est la suivante:
1. Film en spirale d'une épaisseur comprise entre 35 et 60 µm.
2. Masse fondue d'une épaisseur comprise entre 10 et 15 µm, ou colle d'une épaisseur comprise entre 25 et 50 gr/m².
3. Film métallique d'une épaisseur comprise entre 7 et 200 µm.
4. Masser fondue d'une épaisseur comprise entre 10 et 15 µm.
5. Film en spirale d'une épaisseur comprise entre 35 et 60 µm.
6. Colle d'une épaisseur comprise entre 25 et 50 gr/m²

34. Dispositif de fixation selon l'une ou plusieurs des revendications ci-avant, **caractérisé en ce que** la feuille (1) consiste en un système multicouche dont la structure est la suivante:
1. Stratifié en croisé d'une épaisseur comprise entre 80 et 130 µm, consistant en deux couches stratifiées en un matériau de polyoléfine unies entre elles par une masse fondue.
2. Masse fondue d'une épaisseur comprise entre 10 et 15 µm.
3. Feuille métallique ou tissu de feuille métallique d'une épaisseur comprise entre 7 et 200 µm.
4. Masse fondue d'une épaisseur comprise entre 10 et 15 µm.
5. Film en spirale d'une épaisseur comprise entre 35 et 60 µm, consistant en un matériau de polyoléfine.
6. Masse fondue d'une épaisseur comprise entre 10 et 15 µm, ou colle d'une épaisseur comprise entre 25 et 50 gr/m².

35. Dispositif de fixation selon l'une ou plusieurs des revendications ci-avant, **caractérisée en ce que** la feuille (1) consiste en un système multicouche dont la structure est la suivante:
1. Colle d'une épaisseur comprise entre 25 et 50 gr/m².
2. Stratifié en croisé d'une épaisseur comprise entre 80 et 130 µm.
3. Masse fondue d'une épaisseur comprise entre 10 et 15 µm.
4. Feuille métallique ou tissu de feuille métallique d'une épaisseur comprise entre 7 et 200 µm.
5. Masse fondue d'une épaisseur comprise entre 10 et 15 µm.
6. Matériau de polyoléfine d'une épaisseur comprise entre 10 et 15 µm.
